# EUROPÄISCHE PATENTSCHRIFT

(11) **EP 3 587 232 B1**
(45) Veröffentlichungstag und Bekanntmachung des Hinweises auf die Patenterteilung: **06.12.2023**
(21) Anmeldenummer: 19180062.2
(22) Anmeldetag: 13.06.2019
(51) Int. Cl.: B62K 19/30, B62M 6/90

(54) **RAHMEN FÜR EIN ELEKTROFAHRRAD**
FRAME FOR AN ELECTRIC BICYCLE
CADRE DE BICYCLETTE ÉLECTRIQUE

(30) Priorität: 15.06.2018 DE 202018103384 U
(43) Veröffentlichungstag der Anmeldung: 01.01.2020
(73) Patentinhaber: ZEG Zweirad-Einkaufs-Genossenschaft eG, 50739 Köln (DE)
(72) Erfinder: Böhm, Peter, 64839 Münster (DE)
(74) Vertreter: Patentanwälte Buschhoff Hennicke Althaus

(56) Entgegenhaltungen:
- CN-A- 107 539 415
- DE-A1-102014 226 828
- DE-U1-202008 009 933
- DE-U1-202015 003 010
- TW-U- M 529 647
- US-A1- 2017 297 647

## Beschreibung

Die Erfindung betrifft einen Rahmen für ein Elektrofahrrad mit einem eine Aufnahme für einen Speicherakku aufweisenden Rahmenrohr, das eine Oberseite, eine Unterseite und je eine rechts- und linksseitige Seitenwand ausbildet.

Fahrräder (E-Bikes, Pedelecs, S-Pedelecs u.ä.), die mit einem elektrischen (Hilfs-)Motor versehen sind, sind in den vergangenen Jahren zunehmend beliebt geworden. Die Anordnung des Speicherakkus an dem Rahmen solcher Fahrräder stellt die Konstrukteure dabei durchaus vor Herausforderungen, um verschiedene Anforderungen zu erfüllen. So soll im Allgemeinen eine einfache Demontage des Akkus vom Rahmen möglich sein, der Schwerpunkt des Rades soll durch den am Fahrradrahmen angebrachten Akku nicht negativ beeinflusst werden und auch optisch soll sich der Akku möglichst harmonisch in das Gesamterscheinungsbild des Fahrrades einfügen.

Es ist daher schon vorgeschlagen worden, den Akku teilweise, vorzugsweise sogar vollständig in eines der Rahmenrohre des Rahmens, vorzugsweise das vom Steuerrohr schräg nach unten zum Tretlager bzw. dem dort meist angeordneten Fahrmotor verlaufenden Unterrohr zu integrieren, das zu diesem Zweck mit einer geeigneten Aufnahme für den Speicherakku versehen ist. Allerdings ist bei den bekannten Rahmen die Entnahme des Akkus aus der Aufnahme, beispielsweise zum Laden, und der Wiedereinbau des geladenen Speicherakkus nicht wirklich zufriedenstellend gelöst. So ist es bekannt, den Speicherakku in Längsrichtung des Rahmenrohrs entweder von oben, also vom Steuerbereich in das Rahmenrohr einzuschieben und in entgegengesetzter Richtung wieder herauszuziehen, oder ihn nach unten, also im Bereich des Tretlagers bzw. des Fahrmotors aus dem Rahmenrohr herauszuziehen und in entgegengesetzter Richtung einzuschieben. Die letztgenannte Möglichkeit ist wegen der schlechten Zugänglichkeit einer entsprechenden, nahe dem Tretlager/Fahrmotor dann erforderlichen Öffnung im Rahmenrohr und des dort meist am Fahrrad anhaftenden Schmutzes unpopulär. Beim Einschub bzw. Herausziehen des Akkus von oben ist dies im Allgemeinen nur mit einem zusätzlichen Werkzeug möglich, wobei sich auch dann der Akku im Rohr leicht verhaken oder verkanten kann, was die Montage und Demontage erschwert.

Es gibt auch einen Vorschlag, den Speicherakku in eine an der Unterseite des Unterrohrs offene Aufnahme von unten einzusetzen. Wenn sich allerdings bei dieser Konstruktion die Verriegelung des Akkus im Rahmenrohr ungewollt löst, kann der Akku, im schlimmsten Fall bei voller Fahrt, plötzlich aus dem Rahmen herausfallen, was nicht nur schnell eine Beschädigung des Speicherakkus bei dessen Auftreffen auf hartem Untergrund zur Folge hat, sondern leicht zu einem Unfall führen kann, wenn der Radfahrer mit dem Hinterrad des Fahrrads über den plötzlich herausgefallenen Akku fährt. Eine nach oben am Rahmenrohr offene Aufnahme für den Speicherakku ist in dieser Hinsicht natürlich vorteilhafter. Sie birgt allerdings den Nachteil, dass bei dem dann erforderlichen Entnehmen des Speicherakkus nach oben der Akku leicht an einem über dem betreffenden Rahmenrohr angeordneten weiteren Rahmenrohr (bei Diamantrahmen das Oberrohr, bei einem Trapezrahmen das obere von zwei etwa parallel schräg nach unten verlaufenden Unterrohren) anstoßen kann, so dass die Größe von derart von oben einsetzbaren Speicherakkus und damit deren Speicherkapazität nur gering sein kann.

Bei einer aus der DE 20 2011 050 777 U1 bekannten Ausführungsform wird der Akku um eine koaxial zum Unterrohr verlaufende Schwenkachse verschwenkt, um in seine Montageposition zu gelangen, in der er in einem von zwei Rohren des Fahrradrahmens gebildeten Aufnahmefach im Wesentlichen koplanar mit den Rahmenrohren liegt. Diese Konstruktion funktioniert zwar bei der Montage und Demontage des Akkus gut und ermöglicht es auch, einen vergleichsweise großen Akku in einem engen Zwischenraum zwischen zwei Rahmenrohren unterzubringen. Die Konstruktion hat aber den Nachteil, dass der Speicheracku in seinen Abmessungen immer genau an die Größe des Aufnahmefaches, das zwischen den beiden Rahmenrohren ausgebildet ist, angepasst sein muss, um darin sicher gehalten zu werden. Es ist daher erforderlich, bei Änderungen der Geometrie des Fahrradrahmens (Diamant- oder Trapezrahmen, unterschiedliche Rahmengrößen) auch die Abmessungen des Akkus entsprechend anzupassen, so dass für verschieden gestaltete Rahmen immer andere Speicherakkus zu Verfügung stehen müssen.

Das Dokument DE 10 2014 226828 A1 offenbart die Merkmale des Oberbegriffs von Anspruch 1.

Aufgabe der Erfindung ist es, einen Fahrradrahmen der eingangs genannten Art zu schaffen, an dessen hierfür vorgesehenen Rahmenrohr sich der Speicherakku besonders einfach und sicher anbringen lässt. Diese Aufgabe wird mit der Erfindung durch eine die Aufnahme in einem Übergangsbereich zwischen der Oberseite und einer der Seitenwände randseitig begrenzende Öffnung in dem Rahmenrohr gelöst, die sich zumindest über eine Teilbreite der Oberseite und der an diese angrenzenden Seitenwand so erstreckt, dass der Speicherakku in einer Richtung schräg von oben und der Seite in die Aufnahme einsetzbar und aus dieser entnehmbar ist.

Diese Ausgestaltung hat den Vorteil, dass der Akku nicht ungewollt aus der Aufnahme herausfallen kann, denn die Aufnahme ist an der Unterseite geschlossen. Beim Ein- und Ausbau des Speicherakkus werden Kollisionen mit einem über dem die Aufnahme aufweisenden Rahmenrohr liegenden (Ober-) Rohr vermieden, denn der Ein- und Ausbau erfolgen nicht vertikal von bzw. nach oben, sondern schräg, also im Wesentlichen über die Diagonale des Rahmenquerschnitts. Auch ein seitliches Herausfallen des Akkus bei nicht korrekt erfolgter Verriegelung, beispielsweise bei schneller Kurvenfahrt mit starker Schräglage, ist nicht zu befürchten, da sich die Öffnung, durch die der Akku in die Aufnahme schräg von oben und der Seite eingesetzt wird, nur im oberen Bereich der Seitenwand befindet, und darunter ein ausreichend hoher Seitenwandsteg verbleibt, der den eingesetzten Akku seitlich abstützt.

In erfindungsgemäßer Weiterbildung kann ein Verschlussdeckel für die Öffnung vorgesehen sein, der diese vorzugsweise im Wesentlichen bündig verschließt. Dabei ist es in vorteilhafter Weise möglich, dass der Speicherakku mit dem Verschlussdeckel eine Einheit bildet oder der Speicherakku den Verschlussdeckel ausbildet. Diese Ausgestaltung hat dann den Vorteil, dass der in die Aufnahme eingesetzte Speicherakku im Fahrradrahmen komplett gekapselt aufgenommen und als solcher nicht weiter erkennbar ist.

Es ist mit der Erfindung in vorteilhafter Weise möglich, dass die Oberseite, die Unterseite und die rechts- und linksseitigen Seitenwände eine im Wesentlichen rechteckige Querschnittsform des Rahmenrohrs ausbilden, wobei die Öffnung sich über einen oberen Eckbereich in die Oberseite und die eine der beiden Seitenwände jeweils über eine Teilbreite derselben erstreckt.

Die Länge der Öffnung kann zweckmäßig an die Länge des Speicherakkus angepasst sein. In weiter vorteilhafter Ausgestaltung der Erfindung ist vorgesehen, dass die Aufnahme einen schräg oder diagonal unter einem Winkel von bevorzugt zwischen 30° und 60° zur Vertikalmittelebene des Rahmenrohrs seitlich nach oben geneigten Einschub für den Speicherakku bildet. Die Anordnung kann bevorzugt so getroffen sein, dass der Einschub einen in Einschubrichtung unterseitigen Akkuanschlag mit Rahmenkontakten aufweist, deren Position an die Lage von an dem Speicherakku angeordneten Akkukontakten angepasst ist.

Die Erfindung ermöglicht in vorteilhafter Weise ein an der Oberseite in einem Bereich seitlich neben der Öffnung und/oder an dem Verschlussdeckel angeordnetes Haltemittel für mindestens ein Anbauteil, beispielsweise einen Trinkflaschenhalter, da die Oberseite im Bereich der Aufnahme nicht vollständig, also über seine gesamte Breite unterbrochen ist, sondern über eine beispielsweise etwa die Hälfte der Gesamtbreite ausmachende Teilbreite über die Länge der Aufnahme von oben nach unten durchgeht, so dass das Haltemittel, das aus einer oder mehreren Gewindebohrungen an der Oberseite des Rahmenrohrs bestehen kann, vorgesehen werden kann.

Weitere Merkmale und Vorteile der Erfindung ergeben sich aus der nachfolgenden Beschreibung und der Zeichnung, worin eine bevorzugte Ausführungsform der Erfindung anhand eines Beispiels näher dargestellt und erläutert ist. Es zeigt:
- Fig.1: einen erfindungsgemäßen Rahmen mit eingebautem Speicherakku einschließlich Verschlussdeckel in einer Seitenansicht;
- Fig.2: den Gegenstand der Fig.2 im Schnitt gemäß der Linie II-II;
- Fig.3: einen Abschnitt des Unterrohrs des Rahmens nach Fig. 1 mit darin eingebautem Speicherakku ohne Verschlussdeckel, in einer perspektivischen Darstellung;
- Fig.4: den Abschnitt des Unterrohrs gemäß Fig.2 mit lediglich teilweise eingesetztem Speicherakku, ebenfalls in einer perspektivischen Darstellung; und
- Fig.5: den Abschnitt des Unterrohrs ohne den Speicheracku, in einer perspektivischen Darstellung aus einer im Vergleich zu Fig.3 und 4 anderen Perspektive.

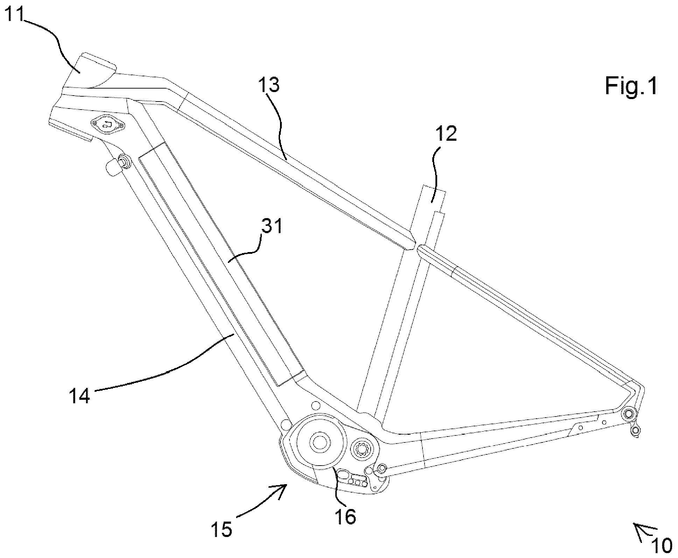

In Fig. 1 ist mit 10 in seiner Gesamtheit ein Rahmen für ein Elektrofahrrad bezeichnet, der in üblicher Weise ein zwischen einem vorderen Steuerrohr 11 und einem zentralen Sattelrohr 12 verlaufendes Oberrohr 13 sowie ein darunter liegendes Unterrohr 14 aufweist, das sich schräg vom Steuerrohr 11 zu einem unten am Sattelrohr 12 sich anschließenden Tretlagerbereich 15 erstreckt, in dem eine strombetriebene Motor-Getriebeeinheit 16 angeordnet ist, die den Fahrer des mit dem Fahrradrahmen ausgestatteten Fahrrads beim Treten unterstützt.

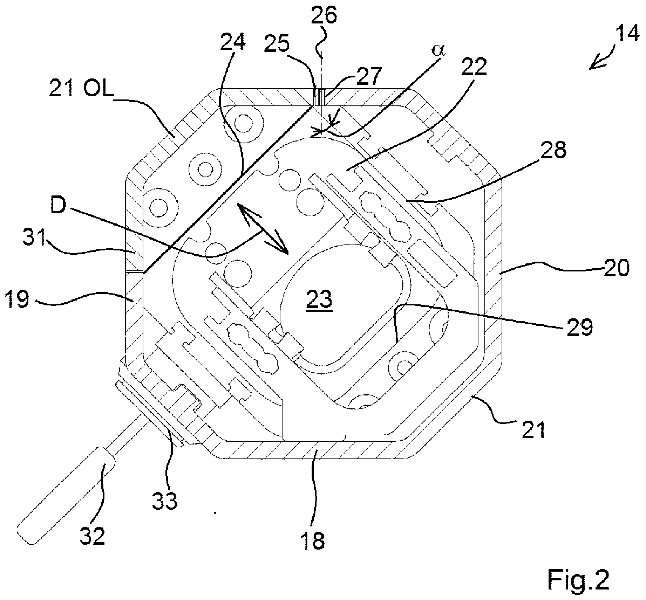

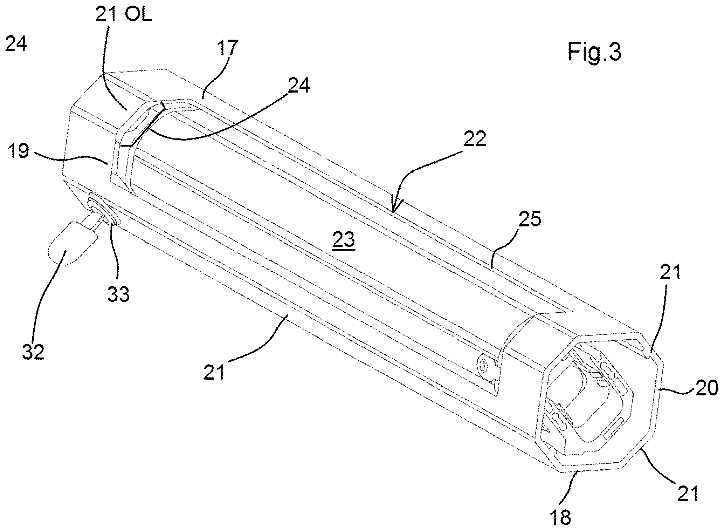

Das Unterrohr 14 weist einen im Vergleich zum Oberrohr 13 und Sattelrohr 12 vergrößerten, im Wesentlichen recht- bzw. achteckigen Querschnitt auf, wie dies am besten in den Figuren 2 bis 4 zu erkennen ist. Es bildet eine Oberseite 17, eine dazu parallele Unterseite 18 sowie zwei zueinander parallele, vertikale Seitenwände 19,20 aus, die mit etwa unter einem Winkel von 45° schräg verlaufenden Eckwandstücken 21 zu einem am oberen Ende des Unterrohrs 14 nahe dem Steuerrohr 11 und am unteren Ende nahe dem Tretlagerbereich 15 geschlossenen Kastenprofil miteinander verbunden sind.

Das Unterrohr 14 bildet eine Aufnahme 22 für einen Speicherakku 23 aus, der auswechselbar an dem Rahmen 10 angebracht werden kann. Zu diesem Zweck ist die Aufnahme 22 in einem von dem einen der beiden oberen Eckwandstücke 21 gebildeten Übergangsbereich 24 zwischen der Oberseite 17 und der einen, in Fahrtrichtung linksseitigen Seitenwand 19 randseitig von einer Öffnung 25 in dem Unterrohr 14 begrenzt. Diese Öffnung 25 erstreckt sich über eine Teilbreite der Oberseite 17 sowie eine Teilbreite (Höhe) der links angrenzenden Seitenwand 19 derart, dass der Speicherakku 23 in einer Richtung D schräg von oben und der Seite in die Aufnahme 22 einsetzbar und aus dieser entnehmbar ist.

Die Öffnung 25 erstreckt sich also über den von dem oberen, linksseitigen Eckwandstück abgeschrägt ausgeführten Eckbereich 21 OL in die Oberseite 17 und die linksseitige Seitenwand 19 jeweils über eine Teilbreite bzw. -höhe, die bei dem gezeigten Ausführungsbeispiel jeweils etwas kleiner als die halbe Breite der Oberseite 17 bzw. Höhe der Seitenwand 19 ist. Somit ist der im Bereich der Öffnung 25 verbleibende Steg der Oberseite 17 rechts neben der Öffnung ausreichend breit, dass dort in der Vertikalmittelebene 26 des Unterrohrs 14 seitlich neben der Öffnung 25 ein Haltemittel 27 in Form von zwei in der Oberseite angeordneten Gewindebohrungen vorgesehen sein kann, an dem ein Flaschenhalter (nicht dargestellt) oder ein anderes Anbauteil befestigt werden kann.

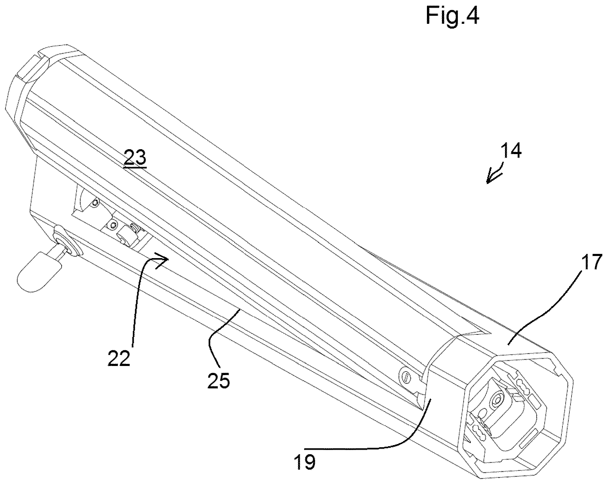

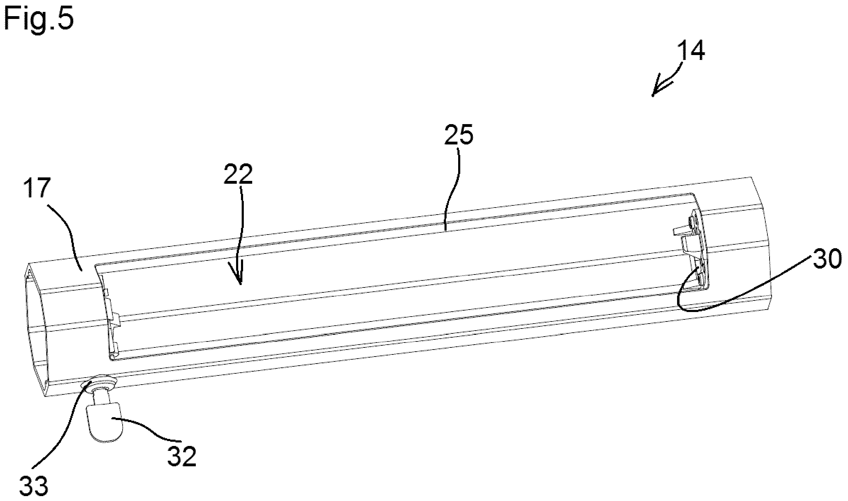

Wie man insbesondere in der Darstellung gemäß Fig. 2 gut erkennen kann, bildet die Aufnahme 22 einen schräg, d.h. diagonal unter einem Winkel α von 45° zur Vertikalmittelebene 26 des unteren Rahmenrohrs 14 seitlich nach oben geneigten Einschub 28 für den Speicherakku 23, in den dieser von schräg oben eingesetzt werden kann und aus dem er in entsprechend entgegengesetzter Richtung nach links oben entnehmbar ist, wie dies die Fig.4 anschaulich macht. Dabei kann die Anordnung so getroffen sein, dass der Einschub 28 einen in der Einschubrichtung D unterseitigen Akkuanschlag 29 mit Rahmenkontakten aufweist, deren Position an die Lage von an dem Speicherakku angeordneten Akkukontakten angepasst ist. Bei dem gezeigten Ausführungsbeispiel allerdings befinden sich Akkukontakte am unteren, stirnseitigen Ende des langestreckt ausgebildeten Speicherakkus 23 und die daran angepassten Rahmenkontakte 30 sind am unteren, zum Tretlagerbereich 15 benachbarten Ende der Aufnahme 22 im Unterrohr 14 zu finden, wie man in der Fig. 5 erkennen kann. In jedem Fall gelangen die Akkukontakte beim Einsetzen des Speicherakkus 23 in die für diesen im Unterrohr 14 vorgesehene Aufnahme 22 bevorzugt automatisch in Eingriff/Kontakt mit den Rahmenkontakten 30, so dass die elektrische, im Akku gespeicherte Energie über diese Verbindung zu der Motor-Getriebeeinheit 16 im Tretlagerbereich gelangen kann.

Damit der in die Aufnahme 22 eingesetzte Speicherakku 23 vor Feuchtigkeit und Eintritt von Schmutz geschützt ist, ist ein Verschlussdeckel 31 für die Öffnung 25 vorgesehen, der diese im Wesentlichen bündig verschließt. Bei dem hier gezeigten Ausführungsbeispiel handelt es sich bei dem Verschlussdeckel 31 um ein separates Bauelement, das mittels eines von einem Schlüssel 32 verriegelbaren Schlosses 33 am Unterrohr 14 gesichert werden kann. Im verschlossenen Zustand verhindert der Verschlussdeckel somit auch einen unbefugten Zugang zu der Aufnahme, so dass der darin eingelegte Akku nicht ohne weiteres entwendet werden kann. Alternativ kann der Verschlussdeckel auch mit dem Speicherakku 23 eine Einheit bilden, er wird dann gemeinsam mit diesem entnommen bzw. wieder angebracht.

Die erfindungsgemäße Ausgestaltung schafft einen besonders vorteilhaften Zugang zu dem in der Aufnahme am unteren Rahmenrohr angeordneten Speicherakku, ohne dass dieser beim Ein- oder Ausbau mit anderen Teilen des Fahrrads kollidiert und ohne dass er unbeabsichtigt, beispielsweise während der Fahrt, sich aus seiner Ausnahme lösen und herausfallen kann. In der gezeigten, vorteilhaften Ausgestaltung sind die Abmessungen des Akkus so, dass dieser vollständig von den Seitenwänden und der Unter- und Oberseite des die Aufnahme aufweisenden Rahmenrohrs (hier dem Unterrohr) umschlossen ist, der Akku also vollständig im Inneren des Rahmenrohr liegt. Es ist weder zu diesem Zweck noch sonst erforderlich, dass das Rahmenrohr einen im wesentlichen rechteckigen Querschnitt aufweist, vielmehr lässt die erfindungsgemäße Ausgestaltung auch einen runden oder anderweitig gestalteten Rohrquerschnitt zu. Um ihn leichter entnehmen zu können, kann am Akku eine Zuglasche oder ein beispielsweise ausklappbares Griffstück (nicht dargestellt) angebracht sein, an der/dem er leicht erfasst und aus dem Einschub herausgezogen werden kann, sobald die Öffnung nach Entfernen des Verschlussdeckels frei liegt.

## Patentansprüche

1. Rahmen für ein Elektrofahrrad mit einem eine Aufnahme (22) für einen Speicherakku (23) aufweisenden Rahmenrohr (14), das eine Oberseite (17), eine Unterseite (18) und je eine rechts- und linksseitige Seitenwand (19,20) ausbildet, wobei die Aufnahme (22) in einem Übergangsbereich (24) zwischen der Oberseite (17) und einer der Seitenwände (19) von einer Öffnung (25) in dem Rahmenrohr (14) randseitig begrenzt ist, **dadurch gekennzeichnet, dass** die Öffnung (25) sich zumindest über eine Teilbreite der Oberseite (17) und der an diese angrenzenden Seitenwand (19) so erstreckt, dass der Speicherakku (23) in einer Richtung (D) schräg von oben und der Seite in die Aufnahme (22) einsetzbar und aus dieser entnehmbar ist.

2. Rahmen nach Anspruch 1, **gekennzeichnet durch** einen Verschlussdeckel (32) für die Öffnung (25), der diese vorzugsweise im Wesentlichen bündig verschließt.

3. Rahmen nach Anspruch 2, **dadurch gekennzeichnet, dass** der Speicherakku (23) mit dem Verschlussdeckel (31) eine Einheit bildet oder der Speicherakku (23) den Verschlussdeckel ausbildet.

4. Rahmen nach einem der Ansprüche 1 bis 3, **dadurch gekennzeichnet, dass** die Oberseite (17), die Unterseite (18) und die rechts- und linksseitigen Seitenwände (19,20) eine im Wesentlichen rechteckige Querschnittsform des Rahmenrohrs (14) ausbilden, wobei die Öffnung (25) sich über einen oberen Eckbereich (21 OL) in die Oberseite (17) und die eine der beiden Seitenwände (19) jeweils über eine Teilbreite derselben erstreckt.

5. Rahmen nach einem der Ansprüche 1 bis 4, **dadurch gekennzeichnet, dass** die Länge der Öffnung (25) an die Länge des Speicherakkus (23) angepasst ist.

6. Rahmen nach einem der Ansprüche 1 bis 5, **dadurch gekennzeichnet, dass** die Aufnahme (22) einen schräg oder diagonal unter einem Winkel von bevorzugt zwischen 30° und 60° zur Vertikalmittelebene (26) des Rahmenrohrs (14) seitlich nach oben geneigten Einschub (28) für den Speicherakku (23) bildet.

7. Rahmen nach Anspruch 6, **dadurch gekennzeichnet, dass** der Einschub (28) einen in Einschubrichtung (D) unterseitigen Akkuanschlag (29) mit Rahmenkontakten (30) aufweist, deren Position an die Lage von an dem Speicherakku (23) angeordneten Akkukontakten angepasst ist.

8. Rahmen nach einem der Ansprüche 1 bis 7, **gekennzeichnet durch** ein an der Oberseite (17) in einem Bereich seitlich neben der Öffnung (25) und/oder an dem Verschlussdeckel (31) angeordnetes Haltemittel (27) für mindestens ein Anbauteil.

## Claims

1. Frame for a electric bicycle with a frame tube (14) which has a mount (22) for a storage battery (23), which frame tube forms a top side (17), a bottom side (18) and a right-hand and left-hand side wall (19, 20) respectively, wherein the mount (22) is bordered at the edge in a transitional region (24) between the top side (17) and one of the side walls (19) by an opening (25) in the frame tube (14), **characterised in that** the opening (25) extends at least over a partial width of the top side (17) and its adjoining side wall (19) so that the storage battery (23) can be inserted into and removed from the mount (22) in a direction (D) obliquely from above and the side.

2. Frame according to claim 1, **characterised by** a closing cover (32) for the opening (25), which preferably closes it substantially flush.

3. Frame according to claim 2, **characterised in that** the storage battery (23) forms a unit with the closing cover (31) or the storage battery (23) forms the closing cover.

4. Frame according to any one of claims 1 to 3, **characterised in that** the top side (17), the bottom side (18) and the right-hand and left-hand side walls (19, 20) form a substantially rectangular cross-sectional shape of the frame tube (14), wherein the opening (25) extends over an upper corner region (21 OL) into the top side (17) and one of the two side walls (19) extends respectively over a partial width thereof.

5. Frame according to any one of claims 1 to 4, **characterised in that** the length of the opening (25) is adjusted to the length of the storage battery (23).

6. Frame according to any one of claims 1 to 5, **characterised in that** the mount (22) forms a slot (28) for the storage battery (23) which is inclined laterally upwards obliquely or diagonally at an angle of preferably between 30° and 60° to the vertical central plane (26) of the frame tube (14).

7. Frame according to claim 6, **characterised in that** the slot (28) has a battery stop (29) on the bottom side in insertion direction (D) with frame contacts (30) whose position is adjusted to the position of battery contacts arranged on the storage battery (23).

8. Frame according to any one of claims 1 to 7, **characterised by** a retaining means (27) for at least one attachment arranged on the top side (17) in a region laterally next to the opening (25) and/or on the closing cover (31).

## Revendications

1. Cadre pour une bicyclette électrique avec un tube de cadre (14) présentant un logement (22) pour une batterie de stockage (23), tube qui réalise un côté supérieur (17), un côté inférieur (18) et respectivement une paroi latérale (19, 20) côté droit et gauche, selon lequel le logement (22) est délimité côté bord dans une zone de transition (24) entre le côté supérieur (17) et une des parois latérales (19) par une ouverture (25) dans le tube de cadre (14), **caractérisé en ce que** l'ouverture (25) s'étend au moins sur une largeur partielle du côté supérieur (17) et de la paroi latérale (19) contiguë à celui-ci de sorte que la batterie de stockage (23) puisse être insérée dans une direction (D) en biais par le haut et le côté dans le logement (22) et puisse être retiré de celui-ci.

2. Cadre selon la revendication 1, **caractérisé par** un couvercle de fermeture (32) pour l'ouverture (25) qui ferme celle-ci de préférence sensiblement à fleur.

3. Cadre selon la revendication 2, **caractérisé en ce que** la batterie de stockage (23) avec le couvercle de fermeture (31) forme une unité ou la batterie de stockage (23) réalise le couvercle de fermeture.

4. Cadre selon l'une quelconque des revendications 1 à 3, **caractérisé en ce que** le côté supérieur (17), le côté inférieur (18) et les parois latérales (19, 20) côté droit et gauche réalisent une forme de section transversale sensiblement rectangulaire du tube de cadre (14), selon lequel l'ouverture (25) s'étend sur une zone d'angle (21 OL) supérieure dans le côté supérieur (17) et l'une des deux parois latérales (19) respectivement sur une largeur partielle de celle-ci.

5. Cadre selon l'une quelconque des revendications 1 à 4, **caractérisé en ce que** la longueur de l'ouverture (25) est adaptée à la longueur de la batterie de stockage (23).

6. Cadre selon l'une quelconque des revendications 1 à 5, **caractérisé en ce que** le logement (22) forme un enfoncement (28) incliné latéralement vers le haut en biais ou en diagonale selon un angle de préférence entre 30° et 60° par rapport au plan médian vertical (26) du tube de cadre (14) pour la batterie de stockage (23).

7. Cadre selon la revendication 6, **caractérisé en ce que** l'enfoncement (28) présente une butée de batterie (29) côté inférieur dans le sens d'enfoncement (D) avec des contacts de cadre (30), dont la position est adaptée à la position de contacts de batterie agencés au niveau de la batterie de stockage (23).

8. Cadre selon l'une quelconque des revendications 1 à 7, **caractérisé par** un moyen de retenue (27) agencé au niveau du côté supérieur (17) dans une zone latéralement à côté de l'ouverture (25) et/ou au niveau du couvercle de fermeture (31) pour au moins une pièce à rapporter.
